# EUROPÄISCHE PATENTSCHRIFT

(11) **EP 0 829 795 B1**
(45) Veröffentlichungstag und Bekanntmachung des Hinweises auf die Patenterteilung: **10.11.1999**
(21) Anmeldenummer: 97114339.1
(22) Anmeldetag: 20.08.1997
(51) Int. Cl.: G05D 23/02, G05D 23/13, F01P 7/16

(54) **Thermostatventileinheit**
Thermostatic valve unit
Vanne thermostatique

(30) Priorität: 17.09.1996 DE 19637818
(43) Veröffentlichungstag der Anmeldung: 18.03.1998
(73) Patentinhaber: Modine Manufacturing Company, Racine, Wisconsin 53403-2552 (US); Bayerische Motoren Werke Aktiengesellschaft, 80788 München (DE)
(72) Erfinder: Kalbacher, Klaus, 72414 Rangendingen (DE); Schütterle, Karl, 72141 Walddorfhäslach (DE); Eckerskorn, Winfrid, 85521 Ottobrunn (DE); Temmesfeld, Axel, 83064 Raubling (DE)
(74) Vertreter: Wolter, Klaus-Dietrich

(56) Entgegenhaltungen:
- DE-A- 2 314 301
- DE-B- 2 206 266
- US-A- 3 768 731
- US-A- 5 048 751
- US-A- 5 395 041

## Beschreibung

Die Erfindung richtet sich auf eine Thermostatventileinheit mit zwei Thermoelementen, die in einem geteilten Gehäuse angeordnet sind, das Zu - und Abströmöffnungen aufweist und das außerdem je eine den Thermoelementen zugeordnete Druckfeder aufnimmt.

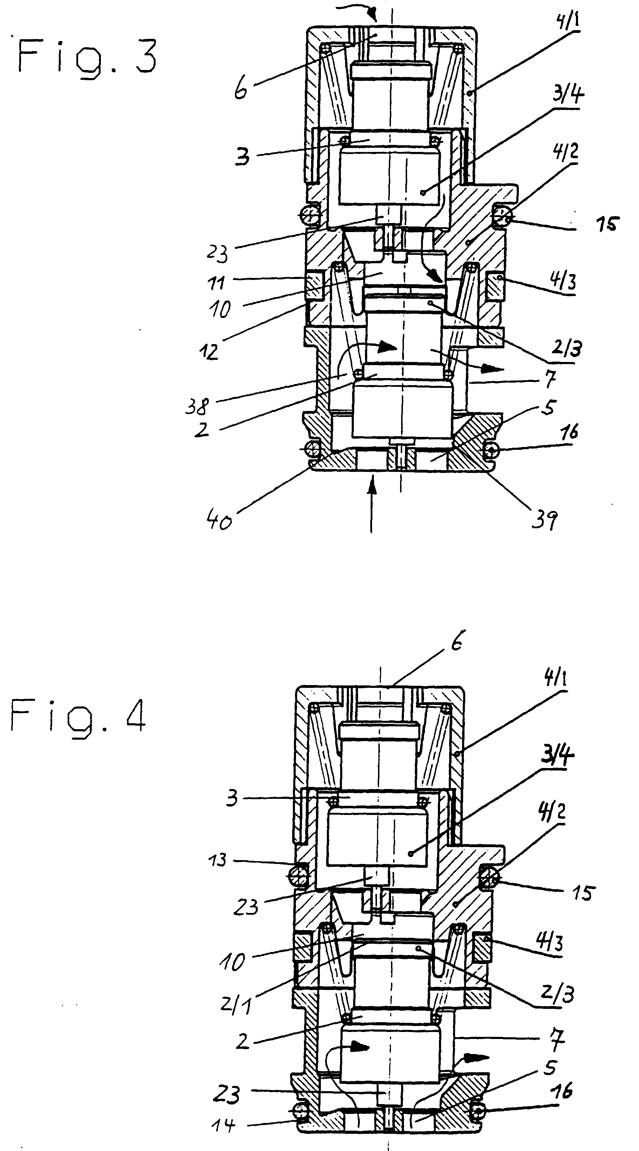

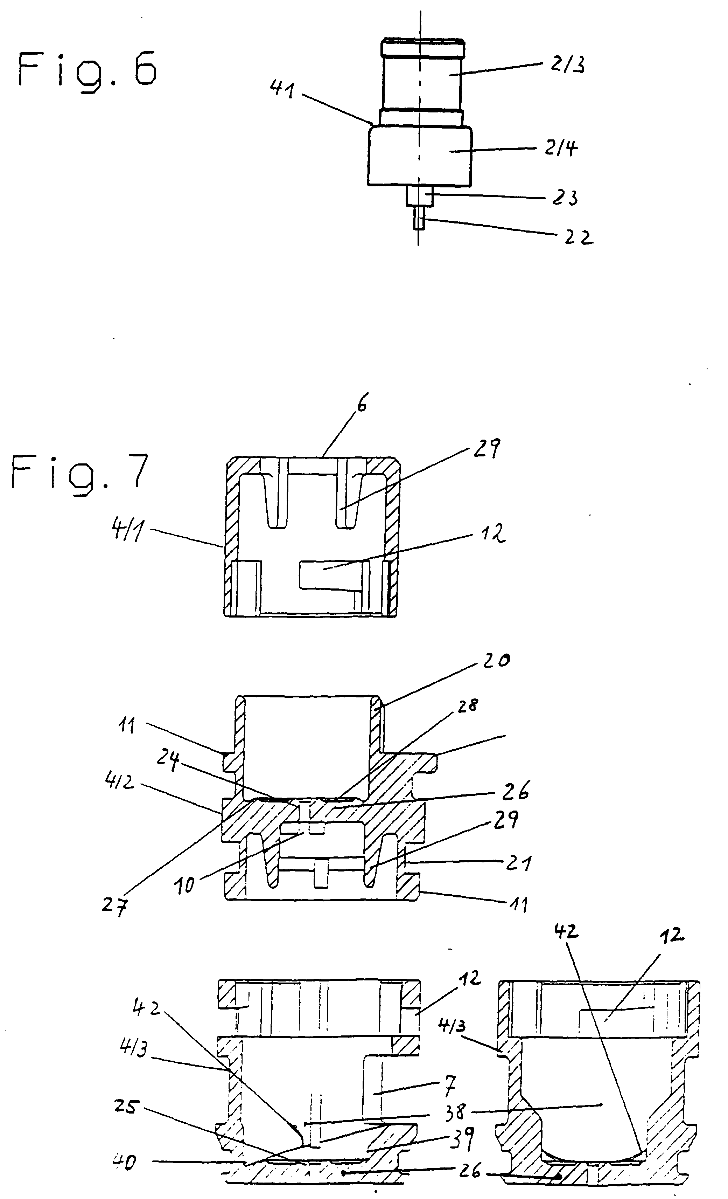

Eine mit diesen Merkmalen ausgestattete Thermostatventileinheit ist aus der DE-AS 23 14 301 bekannt. Das Thermostatgehäuse besteht hier offensichtlich aus Metallguß, das die Anschlußstutzen für das ein- und ausströmende Kühlwasser mit einschließt.
Die Gehäuseteile sind mittels Schraubverbindungen unter Einschluß von Dichtungen zusammengehalten. Die Thermoelemente tragen Ventilteller zum Öffnen oder Schließen der Öffnungen je nach eingestellter Reaktionstemperatur. Solche oder ähnliche Thermostatventileinheiten arbeiten sehr zufriedenstellend als sogenannte Motor-Hauptthermostate, wo sie dafür geeignet sind, beispielsweise beim Kaltstart des Motors das Kühlwasser so unter Ausschluß des Wasserkühlers zu führen, daß eine schnelle Motorerwärmung und eine schnelle Aufheizung des Passagierraumes über einen Heizungswärmetauscher möglich wird. Nach dem Erreichen einer vorbestimmten Temperatur wird das Kühlwasser durch den Wasserkühler geführt. Um diese Funktionen ausführen zu können ist die Thermostatventileinheit in der Vereinigungsstelle der Kühlmittelleitungen vom und zum Motor bzw. zur Kühlwasserpumpe und vom und zum Wasserkühler sowie gegebenenfalls vom und zu einem Heizungswärmetauscher angeordnet. Die Kühlmittelleitungen sind an die am Ventilgehäuse angeformten Stutzen angeschlossen. Solche Thermostatventileinheiten sind nicht besonders montagefreundlich und haben wegen des Metallgehäuses wahrscheinlich auch ein großes Gewicht. Ferner sind sie für den Einsatz als Motor-Hauptthermostat konzipiert und für andere Einsatzfälle, beispielsweise dort wo geringere Massenströme fließen zu groß und unförmig.
Ein weiterer als Motor-Hauptthermostat eingesetzter Regelthermostat ist aus der deutschen Auslegeschrift 27 55 465 bekannt. Hier ist das Gehäuse einteilig. Auch hier sind Ventilteller und Gestänge mit den Thermoelementen in Wirkverbindung, zur Regulierung der Durchflußmenge gemäß der anliegenden Temperatur des Kühlwassers.
Wie beispielsweise aus der DE-PS 44 16 240 hervorgeht, hat man später die Baugröße von Thermostatventilen verringert und auch das Gewicht durch den Einsatz von Gehäusen aus Kunststoff deutlich reduziert. Hier handelt es sich nicht um einen Doppelthermostat sondern um Thermostate mit einem einzelnen Thermoelement. Diese Thermostaten haben nicht die für manche Einsatzfälle notwendige Notlaufeigenschaft. Falls also dieses eine Thermoelement ausfällt, können äußerst kritische Betriebszustände eintreten. Ferner besitzt das Thermostatventil an dem Thermoelement angeordnete Ventilteller, die zur Öffnung oder zum Verschluß der Strömungsöffnungen dienen. Auch hier scheint noch eine vereinfachte Gestaltung möglich zu sein.
Andere Thermostatventile benötigen eine elektrische Ansteuerung und weisen zusätzliche Wachsthermostate auf, um die erwähnte Notlaufeigenschaft zu besitzen.
Ein Thermostatventil mit einem elektrischen Heizelement, das ansonsten dem Oberbegriff entspricht, ist aus DE 40 35 179 A1 bekannt. Dieses Thermostatventil benötigt zu seiner Funktion außer den Druckfedern an den Thermoelementen angeordnete Ventilteller, Abstützteil und Bügel. Dadurch erhöht sich die Zahl der Einzelteile, was sich nachteilig auf Herstellung und Montage auswirkt.
Die Aufgabe der Erfindung besteht darin, die erwähnten Nachteile am Stand der Technik zu beseitigen oder zu mildern. Insbesondere soll eine Thermostatventileinheit vorgestellt werden, die gute Notlaufeigenschatten besitzt, keine elektrische Ansteuerung erfordert und auch hinsichtlich des erforderlichen Aufwandes für Herstellung und Montage fortschrittlich ist.
Diese Aufgabe wird erfindungsgemäß durch die in den Patentansprüchen angegebenen Merkmale gelöst.
Die Thermostatregelventileinheit weist zwei in Reihe geschaltete Thermoelemente auf. die vorzugsweise Wachs-Thermoelemente sind. Beide Thermoelemente befinden sich in einem geteilten Gehäuse, daß vorzugsweise dreiteilig ist und aus Kunststoff besteht. Alle Gehäuseteile sind unter Einschluß der Thermoelemente, die jeweils von einer konischen Feder in ihren Ausgangspositionen gehalten sind, zusammenfügbar und arretierbar. Dazu sind an den Gehäuseteilen einerseits umfangsseitige Schlitze und andererseits mindestens zwei an einem Einsteckstutzen angebrachte Nasen vorgesehen, die in die Schlitze einfügbar sind und durch Verdrehung um einen geringen Winkel um die Vertikalachse in Raststellen rutschen und gegen die Kraft der erwähnten Federn die Gehäuseteile zusammenhalten. Der untere Gehäuseteil weist eine bodenseitige Öffnung auf, in der wiederum ein Zentrierring mittels Stegen positioniert ist. Diese Öffnung, die in Verbindung, beispielsweise mit dem Niedertemperaturbereich des Wasserkühlers bringbar ist, ist durch die Grundfläche des unteren, mit einer Zentrierspitze versehenen Thermoelementes in der Ausgangsposition verschlossen. Ferner weist das untere Gehäuseteil eine mantelseitige weitere Öffnung auf, die nicht verschließbar ist und durch die beispielsweise der Vorlaufstrom zu einem Wärmetauscher strömen könnte. Darüber hinaus hat das untere Gehäuseteil noch eine umfangsseitige Abdichtung, die gegenüber dem Einsatzgehäuse oder Aufnahmestutzen abdichtet.
Eine vergleichbare Abdichtung, bestehend aus einer Nut mit einem Runddichtring weist auch der mittlere Gehäuseteil auf. Das mittlere Gehäuseteil vereinigt in sich den erwähnten Einsteckstutzen mit den Nasen zum unteren Gehäuseteil und gleiches zum oberen Gehäuseteil. Die Symmetrieachsen beider Einsteckstutzen liegen vorzugsweise um einen gewissen Betrag auseinander. Vorzugsweise um den gleichen Betrag, liegen auch die inneren Öffnungen für das untere und für das obere Thermoelement sowie die Ringfläche für die Abstützung der unteren Druckfeder auseinander. Die Öffnung, die mittels der Grundfläche des oberen Thermoelementes abdichtbar ist, ist ähnlich konfiguriert wie die bodenseitige Öffnung des unteren Gehäuseteiles. Ein wesentlicher Unterschied dieser Öffnung besteht jedoch darin, daß in dem die Öffnung umrahmenden Rand, auf dem die Grundfläche des oberen Thermostaten aufliegt, Kerben oder ähnliche Freischnitte vorhanden sind, die unverschließbar durch die aufliegende Grundfläche sind und die demzufolge dafür Sorge tragen, daß auch in der Schließstellung des oberen Thermoelementes ein minimaler Strom wärmeren Wassers hindurchtreten kann. Mit diesem Minimalstrom wurde auf elegante und einfache Weise ein Dauerstrom wärmeren Wassers, dem man einen Strom kühleren Wassers, beispielsweise aus dem Niedertemperaturbereich, beimischt, was der weiteren Temperaturoptimierung dienlich ist, geschaffen. Der Minimalstrom dient ebenfalls als Notlaufstrom, der bei einem Ausfall des unteren Thermoelementes (Mischregler) geeignet ist, das untere Thermoelement zu aktivieren, aber gleichzeitig auch der Kühlfunktion, beispielsweise in einem Ölkühler, um diesen vor Überhitzung zu schützen
Ein weiteres zu erwähnendes Merkmal des mittleren Gehäuseteiles besteht darin, daß am Umfang dieses Teiles mindestens ein nasenartiger Vorsprung angeformt ist, der zur korrekten Positionierung der Thermostatregelventileinheit in dem Einsatzgehäuse beziehungsweise in den Aufnahmestutzen geeignet ist.
Das dritte, obere Gehäuseteil kann als Gehäusedeckel bezeichnet werden. Es ist topfartig konfiguriert und besitzt oben eine Einströmöffnung, die jedoch wegen des erwähnten Dauerstromes nicht vollständig durch den oberen Thermostaten verschließbar ist. Ferner erweisen sich um diese Öffnung verteilte vertikale Führungsstege für den sich unter Temperaturveränderungen bewegenden Thermostatkörper als vorteilhaft, weil sie das Schwingen der Thermoelemente unterdrücken und die Funktionssicherheit verbessern. Gleiche Führungsstege sind auch im mittleren Gehäuseteil um die Öffnung herum angeordnet, die durch das untere Thermoelement verschließbar ist.
Die Erfindung soll jedoch auch solche Thermostatventileinheiten einschließen. deren Gehäuse nur aus zwei Teilen besteht oder solche die mehr als drei Teile aufweisen. Die Anzahl wird sich im Einzelfall an fertigungstechnische Vorgaben orientieren.
Die Thermoelemente sind auch nur vorzugsweise außerhalb der Koaxialität in dem Gehäuse angeordnet. Das obere Thermoelement arbeitet als temperaturabhängige Drossel und das darunter befindliche Thermoelement funktioniert als Mischregler.
Die erfindungsgemäße Thermostatventileinheit hat Thermoelemente, die nicht mit Ventilteller oder dgl. ausgerüstet sind und die schon deshalb billiger und einfacher herzustellen, jedoch vor allem einfacher und schneller zu montieren sind. Das Schließen und Öffnen der Strömungskanäle erfolgt direkt durch die Thermoelemente selbst bzw. durch deren Formgestaltung. Beispielsweise können die Thermoelemente eine zylindrische Gestalt aufweisen, wobei der Zylinder einen Abschnitt mit kleinerem Durchmesser und einen daran anschließenden Abschnitt mit größerem Durchmesser aufweisen kann. Dabei könnten die beiden Thermoelemente in einem ganz speziellen Einsatzfall auch unterschiedlich gestaltet sein. Wesentlich ist nur, daß die Gestaltung bzw. Form der Thermoelemente mit den Öffnungen im Gehäusekäfig so zusammenwirken, daß die unter Temperaturveränderung stattfindende Lageveränderung der Thermoelemente die besagten Öffnungen in ihren Strömungsquerschnitten verändern können.
Beide Thermoelemente sind vorzugsweise als Wachs-Thermostate ausgeführt, wobei auf zusätzliche elektrische Ansteuerungsmittel vollständig verzichtet werden kann.
Weitere unter Umständen wesentliche Merkmale ergeben sich aus den Patentansprüchen, die alle als an dieser Stelle offenbart gelten sollen. Ferner ergeben sich Merkmale und Wirkungen aus der folgenden Beschreibung.
Nachfolgend wird die Erfindung in einem Ausführungsbeispiel erläutert, wozu auf die beiliegenden Zeichnungen Bezug genommen wird.
Es zeigen:
- Fig. 1 bis 4: Schnitte durch die Thermostatventileinheit in verschiedenen Betriebszuständen
- Fig. 5: Thermostatventileinheit im Einsatzgehäuse
- Fig. 6: Thermoelement
- Fig. 7: Gehäusekäfig

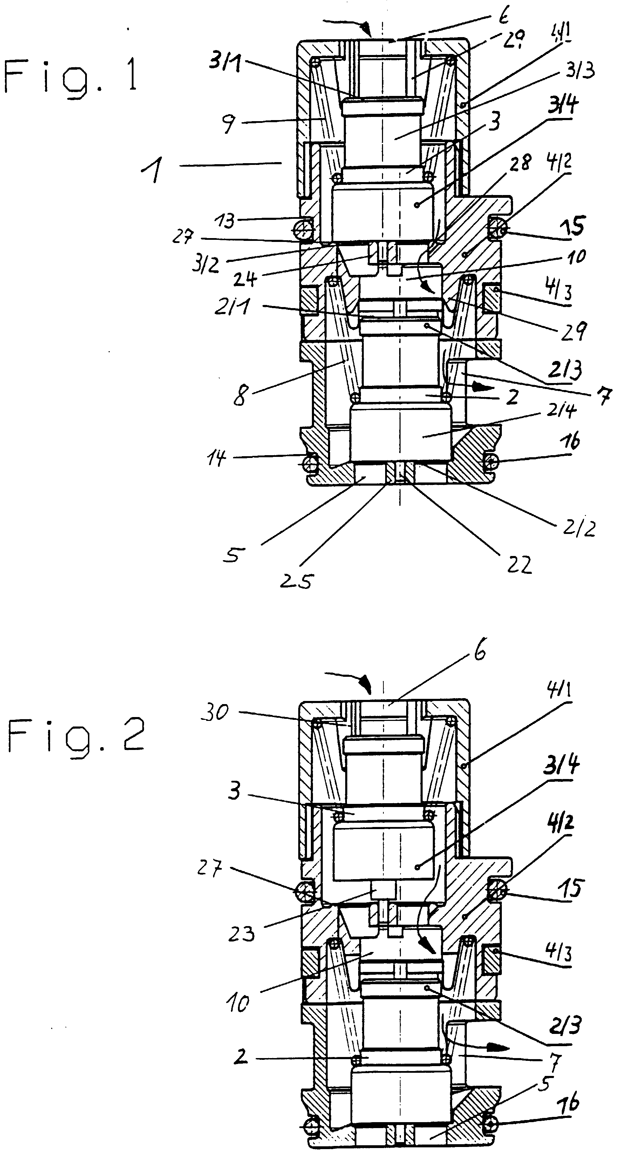

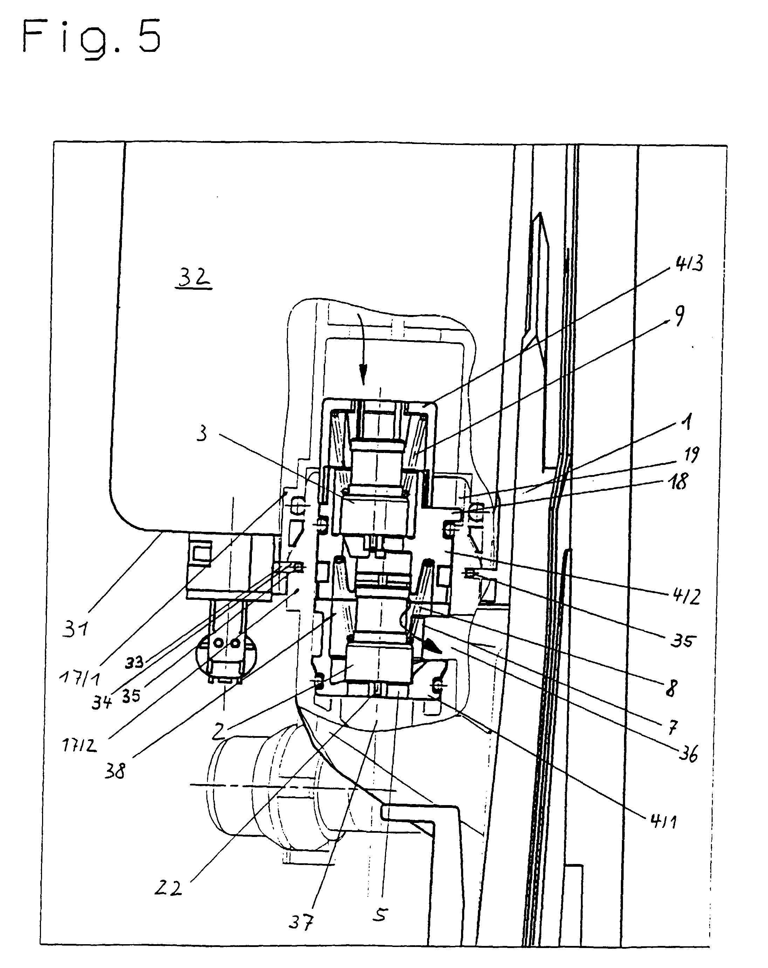

Die Fig. 1 bis 5 zeigen die wichtigen Einzelheiten des beispielsweise im Boden 31 des Ausgleichsbehälters 32 in einem Einsatzgehäuse 17 angeordneten Thermostatventileinheit 1, welches ohne zusätzliche elektrische Ansteuerung die Durchströmung regelt. Die Fig. 5 zeigt nur einen unteren Ausschnitt des Ausgleichsbehälters 32.
Die Thermostatventileinheit 1 ist hier, in Fig. 5, nur beispielsweise im Kühlwasserkreislauf eines Kraftfahrzeuges eingebaut, um gesteuerte Volumenströme unterschiedlicher Temperatur zur Verfügung zu stellen. Es versteht sich, daß die Thermostatventileinheit 1 ebensogut in Kraftstoff-oder Ölkreisläufen eingesetzt werden könnte. Allgemein gesprochen, kann die Thermostatventileinheit 1 überall dort verwendet werden, wo unterschiedlich große Volumenströme innerhalb vorgegebener Temperaturbereiche zu regeln sind.
Die Thermostatventileinheit 1 hat hier drei Gehäuseteile 4/1 oben, 4/2 Mitte, 4/3 unten. Die Gehäuseteile 4/1; 4/2; 4/3 schließen die Thermoelemente 2; 3 ein. Dazu werden die Gehäuseteile 4/1; 4/3 gegen die Kraft der Druckfedern 8 und 9 zusammengedrückt und um einen geringen Winkel verdreht, worauf sie in im Bereich der Einsteckstutzen 20; 21 vorgesehene Raststellen mittels Schlitzen 12 an einem Teil und Nasen 11am gegenseitigen Teil zusammengehalten werden.(Fig. 7) Die so vorbereitete Thermostatventileinheit 1 ist, wie bereits kurz erwähnt, in einem Einsatzgehäuse 17 untergebracht, das hier durch den oberen Aufnahmestutzen 17/1 und den unteren Aufnahmestutzen 17/2 gebildet ist. Der obere Aufnahmestutzen 17/1 ist direkt in dem Boden 31 des Ausgleichsbehälters 32 eingeformt, bzw. stellt hier einen Teil desselben dar. Beide Teile 17/1; 17/2 sind abdichtend zusammensteckbar und werden durch Schlitze 33, Nut 34 und Federklammer 35 gesichert. Hierbei handelt es sich um eine sogenannte Schnell-Steck- Verbindung, bei der die Federklammer 35 gegen Herausfallen gesichert in dem Schlitz 33 des Aufnahmestutzens 17/2 angeordnet ist und beim Zusammenstecken der Teile 17/1; 17/2 in die Nut 34 des Aufnahmestutzens 17/1 einrastet. (Fig.5)
Das Gehäuse 4 der Thermostatventileinheit 1 ist gegenüber dem Einsatzgehäuse 17 ebenfalls abgedichtet, um zu verhindern, daß Wasserströme ungesteuert abfließen. Die Thermoelemente 2; 3 sind hier von zylinderförmiger Gestalt mit einem oberen Abschnitt 2/3; 3/3 kleineren Durchmessers und einem unteren Abschnitt 2/4; 3/4 größeren Durchmessers. (Fig. 1) Sie befinden sich mit in ihren Grundflächen 2/2; 3/2 angeordneten Zentrierspitzen 22 in Zentrierringen 24; 25. Die Zentrierspitzen 22 sind an dem bei Erwärmung herausgedrückten Kolben 23 der Thermoelemente 2; 3 angeordnet, was in Fig. 5 nur angedeutet dargestellt ist. In der Stellung von Fig. 5 (vergleiche auch Fig. 1) sind beide Thermoelemente 2; 3 noch in ihrer unteren Stellung, in der jedoch ein Minimalstrom wärmeren von oben kommenden Wassers über die Kerben oder Freischnitte 28 im Ringwulst 27 einströmen kann, der beispielsweise der Vorwärmung von Getriebeöl über den Vorlaufkanal 36 dient.
Der hier durchströmende Volumenstrom ist einerseits so gering, daß dem Kuhlwasser in der Anfahrphase des Kraftfahrzeuges nur minimal Wärmeenergie entzogen wird und der allergrößte Anteil der Wärmeenergie für die Kabinenheizung erhalten bleibt - aber andererseits ausreichend groß, um auch das Getriebeöl vorzuwärmen. Ferner kann dieser Minimalstrom aber auch einer ausreichenden Getriebeölkühlung dienen, wenn das untere Thermoelement 2 (Mischregler) trotz hoher Temperatur nicht öffnet, weil es beispielsweise defekt ist. Somit ist dieser Minimalstrom auch ein Notlaufstrom.
Bei etwa 80°C (in diesem Beispiel) wird der Kolben 23 durch die Ausdehnung des innerhalb befindlichen Wachses ausgefahren und drückt das obere Thermoelement 3 gegen die Kraft der Druckfeder 9 nach oben, wobei das Thermoelement 3 durch die Führungswangen 29 geführt wird. Wie erkennbar ist, kann die obere Öffnung 6 (Fig. 1 - 4 und 7) nicht vollständig verschlossen werden. Es verbleibt ein Ringspalt 30 (Fig.2), durch den ständig Wasser strömen kann. Bei der Bewegung nach oben wird die Öffnung 10 freigegeben, so daß das Wasser durch die seitliche Austrittsöffnung 7 in den Vorlaufkanal 36 gelangt. Bei weiter steigender Temperatur spricht auch das untere Thermoelement 2 an, dessen Kolben 23 (Fig. 4) das Thermoelement 2 langsam nach oben bewegt. Dabei wird die untere Einströmöffnung 5 nach und nach geöffnet, so daß aus dem Kanal 37 (Fig. 5) kühleres Wasser zuströmen kann, welches sich mit dem von oben einströmenden wärmeren Wasser vermischt und in den Vorlaufkanal 36 einströmt.Bei weiter steigender Temperatur befinden sich beide Thermoelemente 2;3 in ihrer obersten Stellung. Das untere Thermoelement 2, der Mischregler, hat dann mit seiner oberen Grundfläche 2/1 die Durchtrittsöffnung 10 vollständig abgesperrt, so daß ausschließlich gekühlte Flüssigkeit aus dem Kanal 37 in den Vorlaufkanal 36 eintreten kann, was beispielsweise als Kühlmittel einem nicht gezeichneten Ölkühler zugeführt wird.
Die Fig. 1 bis 4 stellen unterschiedliche Betriebssituationen dar. Einige Bezugszeichen wurden der besseren Übersichtlichkeit halber in den Fig. 2 bis 4 nicht eingezeichnet. Die Strömungspfeile verdeutlichen die Betriebszustände. Fig. 1 stellt einen Ausgangszustand dar, in dem beispielsweise durch das Anfahren des noch kalten Motors schnell angewärmte Kühlflüssigkeit in geringer Menge abgezweigt wird und über die Einströmöffnung 6 in die Thermostatventileinheit 1 gelangt. Diese geringe Menge kann über die Freischnitte 28 zur seitlichen Abströmöffnung 7 gelangen und beispielsweise der Vorwärmung eines nicht gezeigten Ölkühlers dienen.
In Fig. 2 ist die Temperatur beispielsweise auf 80°C gestiegen und das Thermoelement 3 hat hier bereits die Durchströmöffnung 10 freigegeben, um einem größeren Volumenstrom den Durchtritt zu ermöglichen.
Mit weiter steigender Temperatur stellt sich der in Fig. 3 dargestellte Betriebszustand ein, der als Mischzustand bezeichnet werden könnte. Auch das untere Thermoelement 2 hat bereits reagiert, so daß über die untere Einströmöffnung 5 kühlere Kühlflüssigkeit hinzutreten kann, die sich mit der von oben kommenden Flüssigkeit in der Mischkammer 38 trifft und über die Abströmöffnung 7 abfließt. Für die Ausbildung der Mischkammer 38 hat es sich als sehr vorteilhaft herausgestellt, an der zur Abströmöffnung 7 weisenden Seite eine Stufe 39 vorzusehen und an der gegenüberliegenden Seite eine Senke 40 auszuformen.
Hierdurch wird der wesentliche Vorteil einer besseren Umspülung des Abschnittes 2/3 des Thermoelementes 2, in dem sich der Dehnstoff befindet, der vorzugsweise ein Wachs ist, erreicht. Es wurde herausgefunden, daß bei derart ausgebildeter Mischkammer 38 das Thermoelement 2 noch besser auf Temperaturschwankungen reagiert. (siehe auch Fig. 7)

Fig. 4 zeigt den Zustand, der als reine Kühlphase angesehen werden kann, denn hier ist die Durchströmöffnung 10 mittels der oberen Grundfläche 2/1 des unteren Thermoelementes 2 verschlossen und von unten tritt kühlere Kühlflüssigkeit ein, die beispielsweise der Getriebeölkühlung zugeführt werden kann.
Die Fig. 6 stellt das hier beispielsweise mit Zylinderform ausgebildete Themoelement 2 oder 3 als Einzelteil dar. Es gibt einen Abschnitt 2/3 mit kleinerem Durchmesser und einen weiteren Abschnitt 2/4 mit größerem Durchmesser. Der dadurch herausgebildete Absatz 41 ist gleichzeitig als das eine Widerlager für die Druckfeder 8 oder 9 vorgesehen, wie in den Fig. 1 bis 5 ebenfalls zu erkennen ist. Hierdurch ist eine wesentliche Vereinfachung bei der Herstellung und Montage der Thermostatventileinheit erzielt worden.
Die Fig. 7 zeigt zum Schluß den Gehäusekäfig 4, der hier aus fertigungstechnischen Gründen aus drei Teilen 4/1; 4/2; 4/3 besteht. Abgebildet ist ein Vertikalschnitt, wobei die Schnittebene durch die Arme 26 gelegt wurde. Die Arme 26, es sind hier vier Arme 26, erstrecken sich zum Mittelpunkt der Durchströmöffnung 10 bzw. der unteren Einströmöffnung 5 und enden in den Zentrierringen 24 oder 25. Der Ringwulst 27 hat Freischnitte 28, damit, wie bereits beschrieben, ein Minimalstrom oder ein Notlaufstrom durch die Durchströmöffnung 10 treten kann. Das obere Gehäuseteil 4/1 ist in zwei Vertikalschnitten dargestellt, um die Ausbildung der Mischkammer 38 deutlicher zu machen. Im linken Vertikalschnitt ist die seitliche Abströmöffnung 7 zu erkennen und die dort vorhandene Stufe 39. Auf der entgegengesetzten Seite ist eine Senke 40 eingearbeitet. Erzielt wird somit ein Strömungsverlauf der von unten eintretenden Flüssigkeit, der eine bessere Aktivierung des unteren Thermoelementes 2 bewirkt, weil beim Abheben des unteren Thermoelementes 2, die Flüssigkeit nicht direkt zur Ausströmöffnung 7 austreten kann, sondern zunächst in die Mischkammer 38 strömt und den den Dehnstoff enthaltenden Teil des Thermoelementes 2 umspült. Aus dem rechten Vertikalschnitt geht die beidseitig ansteigende Ausformung 42 der Mischkammer 38 hervor.

### Bezugszeichenliste

- 1: Thermostatventileinheit
- 2: Thermoelement (unten)
- 2/1: obere Grundfläche von 2
- 2/2: untere Grundfläche von 2
- 2/3: Abschnitt mit kleinem Durchmesser
- 2/4: Abschnitt mit großem Durchmesser
- 3: Thermoelement (oben)
- 3/1: obere Grundfläche von 3
- 3/2: untere Grundfläche von 3
- 3/3: Abschnitt mit kleinem Durchmesser
- 3/4: Abschnitt mit großem Durchmesser
- 4: Gehäusekäfig
- 4/1: oberes Teil
- 4/2: mittleres Teil
- 4/3: unteres Teil
- 5: untere Einströmöffnung
- 6: obere Einströmöffnung
- 7: seitliche Abströmöffnung
- 8: Druckfeder (unten)
- 9: Druckfeder (oben)
- 10: Durchströmöffnung
- 11: Nasen
- 12: Schlitze
- 13: Nut im Gehäusekäfig
- 14: Nut
- 15: O-Ring im Gehäusekäfig
- 16: O-Ring
- 17: Einsatzgehäuse
- 17/1: oberer Aufnahmestutzen
- 17/2: unterer Aufnahmestutzen
- 18: nasenartiger Ansatz am Gehäusekäfig
- 19: Schlitz im Einsatzgehäuse
- 20: oberer Einsteckstutzen an 4/2
- 21: untere Einsteckstutzen an 4/2
- 22: Zentrierspitze
- 23: Kolben
- 24: Zentrierring (oben)
- 25: Zentrierring (unten)
- 26: Arme (Zentrierring)
- 27: Ringwulst
- 28: Freischnitte (Kerben)
- 29: Führungswangen
- 30: Ringspalt
- 31: Boden des Ausgleichsbehälters
- 32: Ausgleichsbehälter
- 33: Schlitze im Aufnahmestutzen
- 34: Nut im Aufnahmestutzen
- 35: Federklammer
- 36: Vorlaufkanal
- 37: Kanal
- 38: Mischkammer
- 39: Stufe
- 40: Senke
- 41: Absatz
- 42: Ausformung in Mischkammer 38

## Patentansprüche

1. Thermostatventileinheit (1) mit zwei übereinander angeordneten Thermoelementen (2;3), die sich in einem geteilten Gehäuse (4) befinden, das Zu - und Abströmöffnungen (5;6;7) aufweist und das außerdem je eine den Thermoelementen (2;3) zugeordnete Druckfeder(8;9) aufnimmt,
dadurch gekennzeichnet, daß
die Teile (4/1; 4/2; 4/3) des Gehäusekäfiges (4) Kunststoff-Spritzgußteile sind, die gegen die Kraft der Druckfedern (8; 9) lösbar verbunden sind und daß die in dem Gehäusekäfig (4) vorgesehenen Strömungsöffnungen (5; 6; 10) und die Gestalt der in dem Gehäusekäfig (4) angeordneten Thermoelemente (2; 3) an die Strömungsöffnungen (5; 6; 10) zur direkten Regelung der Durchflußmenge einander angepaßt sind.

2. Thermostatventileinheit nach Anspruch 1, dadurch gekennzeichnet, daß das eine Thermoelement (3) eine temperaturabhängig arbeitende Drossel ist und das andere Thermoelement (2) als Mischregler arbeitet.

3. Thermostatventileinheit nach den Ansprüchen 1 oder 2, dadurch gekennzeichnet, daß die Thermoelemente (2; 3) vorzugsweise Zylinderform aufweisen, mit einem ersten Abschnitt (2/3; 3/3) kleineren Durchmessers und einem daran anschließenden Abschnitt (2/4;3;4) größeren Durchmessers.

4. Thermostatventileinheit nach den Ansprüchen 1 bis 3, dadurch gekennzeichnet, daß die untere Einströmöffnung (5) durch die untere Grundfläche (2/2) des unteren Thermoelementes (2) (Mischregler) verschließbar ist, die obere Einströmöffnung (6) hinsichtlich des Strömungsquerschnittes durch die obere Grundfläche (3/1) des oberen Thermoelementes (3) (Drossel) veränderbar ist, die mittlere Durchströmöffnung (10) durch die untere Grundfläche (3/2) des oberen Thermoelementes (3) ebenfalls hinsichtlich ihres Strömungsquerschnittes veränderbar, aber durch die obere Grundfläche (2/1) des unteren Thermoelementes (2) verschließbar ist.

5. Thermostatventileinheit nach einem der Ansprüche 1 bis 4, dadurch gekennzeichnet, daß der Gehäusekäfig vorzugsweise aus drei Teilen (4/1; 4/2; 4/3) besteht, die zur lösbaren Verbindung an ihrem Umfang vorstehende Nasen (11) und im benachbarten Teil eingearbeitete Schlitze (12) aufweisen.

6. Thermostatventileinheit nach einem der Ansprüche 1 bis 5, dadurch gekennzeichnet. daß mindestens die Teile (4/2; 4/3) des Gehäusekäfiges (4) am äußeren Umfang je eine Nut (13; 14) aufweisen, die O-Ringe (15; 16) zur Abdichtung gegenüber dem Einsatzgehäuse (17) aufnehmen sowie Mittel zur korrekten Positionierung des Gehäusekäfiges (4) in dem Einsatzgehäuse (17), bestehend aus einem nasenartigen Ansatz (18) der in einen Schlitz (19) des Einsatzgehäuses (17) einführbar ist, vorgesehen sind.

7. Thermostatventileinheit nach den vorstehenden Ansprüchen , dadurch gekennzeichnet, daß sich die Nasen (11) am mittleren Teil (4/2) des Gehäusekäfiges (4), an den dort angeordneten oberen und unteren Einsteckstutzen (20; 21) befinden und daß die Symmetrieachsen der Einsteckstutzen (20; 21) sowie der Durchströmöffnungen (10) gegeneinander versetzt angeordnet sind.

8. Thermostatventileinheit nach den vorstehenden Ansprüchen, dadurch gekennzeichnet, daß die Thermoelemente (2; 3) mit einer Zentrierspitze (22) am unter Temperaturänderungen bewegbaren Kolben (23) versehen sind, die in in den Öffnungen (5; 10) des unteren (4/3) bzw. des mittleren Teiles (4/2) des Gehäusekäfiges (4) vorgesehenen Zentrierringen (24; 25) einsteckbar sind.

9. Thermostatventileinheit nach Anspruch 8, dadurch gekennzeichnet, daß die Zentrierringe (24; 25) von sich vom Öffnungsrand der Öffnungen (5; 10) zum Mittelpunkt der Öffnungen (5; 10) erstreckenden Armen (26) getragen werden.

10. Thermostatventileinheit nach einem der vorstehenden Ansprüchen, dadurch gekennzeichnet, daß die von der unteren Grundfläche (3/2) des oberen Thermoelementes (3) abdeckbare Durchströmöffnung (10) einen umlaufenden Ringwulst (27) aufweist, der partielle unverschließbare Freischnitte (28) besitzt.

11. Thermostatventileinheit nach den vorstehenden Ansprüchen, dadurch gekennzeichnet, daß um die obere Einströmöffnung (6) und um die Durchströmöffnung (10) herum axiale Führungswangen (29) für die Thermoelemente (2 bzw.3) angeordnet sind.

12. Thermostatventileinheit nach den vostehenden Ansprüchen, dadurch gekennzeichnet, daß sich die Führungwangen (29) in der oberen Einströmöffnung (6), zwischen denen das obere Thermoelement (3) bei Temperaturänderungen axial bewegbar ist, um einen geringen Betrag in die Einströmöffnung (6) hinein erstrecken, so daß ein unverschließbarer Ringspalt (30) zwischen der Einströmöffnung (6) und dem Thermoelement (3) vorhanden ist.

13. Thermostatventileinheit nach den vorstehenden Ansprüchen, dadurch gekennzeichnet, daß beide Thermoelemente (2; 3) annähernd die gleiche Reaktionstemperatur, beispielsweise 80°C aufweisen.

14. Thermostatventileinheit nach den vorstehenden Ansprüchen, dadurch gekennzeichnet, daß im unteren Gehäuseteil (4/3) eine Mischkammer (38) ausgebildet ist, die an einer Seite eine Senke (40) und an der gegenüberliegenden, zur Ausströmöffnung (7) weisenden Seite eine Stufe (39) aufweist, um von unten einströmende Flüssigkeit zunächst in die Mischkammer (38) zu leiten, bevor sie die Austrittsöffnung (7) erreicht.

## Claims

1. Thermostatic valve unit (1) having two thermoelements (2; 3), which are arranged one above the other and are located in a split housing (4), which has inflow and outflow openings (5; 6; 7) and which in addition accommodates one compression spring (8; 9) each assigned to the thermoelements (2; 3), characterized in that the parts (4/1; 4/2; 4/3) of the housing cage (4) are plastic injection mouldings, which are detachably connected against the force of the compression springs (8; 9), and in that the flow openings (5; 6; 10) provided in the housing cage (4) and the shape of the thermoelements (2; 3) arranged in the housing cage (4) are mutually adapted for the direct control of the rate of flow.

2. Thermostatic valve unit according to Claim 1, characterized in that one thermoelement (3) is a choke working as a function of temperature, and the other thermoelement (2) works as a mixing controller.

3. Thermostatic valve unit according to Claim 1 or 2, characterized in that the thermoelements (2; 3) preferably have a cylindrical shape, comprising a first section (2/3; 3/3) of smaller diameter and an adjoining section (2/4; 3/4) of larger diameter.

4. Thermostatic valve unit according to Claims 1 to 3, characterized in that the bottom inflow opening (5) can be closed by the bottom surface area (2/2) of the bottom thermoelement (2) (mixing controller), the top inflow opening (6) can be varied with regard to the cross section of flow by the top surface area (3/1) of the top thermoelement (3) (choke), the centre throughflow opening (10) can be varied by the bottom surface area (3/2) of the top thermoelement (3) likewise with regard to its cross section of flow but can be closed by the top surface area (2/1) of the bottom thermoelement (2).

5. Thermostatic valve unit according to one of Claims 1 to 4, characterized in that the housing cage preferably consists of three parts (4/1; 4/2; 4/3), which, for the detachable connection, have lugs (11) projecting at their periphery and slots (12) made in the adjacent part.

6. Thermostatic valve unit according to one of Claims 1 to 5, characterized in that at least the parts (4/2; 4/3) of the housing cage (4) each have a groove (13; 14) at the outer periphery, which grooves (13; 14) accommodate O-rings (15; 16) for sealing relative to the insert housing (17), and means for the correct positioning of the housing cage (4) in the insert housing (17) are provided, consisting of a lug-like extension (18), which can be inserted into a slot (19) of the insert housing (17).

7. Thermostatic valve unit according to the preceding claims, characterized in that the lugs (11) on the centre part (4/2) of the housing cage (4) are located on the top and bottom push-in connections (20; 21) arranged there, and in that the axes of symmetry of the push-in connections (20; 21) and of the throughflow openings (10) are offset from one another.

8. Thermostatic valve unit according to the preceding claims, characterized in that the thermoelements (2; 3) are provided with a centring point (22) on the plunger (23) movable under temperature changes, which centring points (22) can be inserted in centring rings (24; 25) provided in the openings (5; 10) of the bottom part (4/3) and respectively the centre part (4/2) of the housing cage (4).

9. Thermostatic valve unit according to Claim 8, characterized in that the centring rings (24; 25) are carried by arms (26) extending from the rim of the openings (5; 10) to the centre of the openings (5; 10).

10. Thermostatic valve unit according to one of the preceding claims, characterized in that the throughflow opening (10) which can be covered by the bottom surface area (3/2) of the top thermoelement (3) has an encircling annular bead (27), which has partial relief portions (28) which cannot be closed.

11. Thermostatic valve unit according to the preceding claims, characterized in that axial guide cheeks (29) for the thermoelements (2 and 3 resp.) are arranged around the top inflow opening (6) and around the throughflow opening (10).

12. Thermostatic valve unit according to the preceding claims, characterized in that the guide cheeks (29) in the top inflow opening (6), between which guide cheeks (29) the top thermoelement (3) is axially movable during temperature changes, extend into the inflow opening (6) by a small amount, so that there is an annular gap (30), which cannot be closed, between the inflow opening (6) and the thermoelement (3).

13. Thermostatic valve unit according to the preceding claims, characterized in that both thermoelements (2; 3) have approximately the same reaction temperature, for example 80°C.

14. Thermostatic valve unit according to the preceding claims, characterized in that a mixing chamber (38) is formed in the bottom housing part (4/3), and this mixing chamber (38) has a depression (40) on one side and a step (39) on the opposite side, pointing towards the outflow opening (7), in order to direct liquid flowing in from below first of all into the mixing chamber (38) before it reaches the discharge opening (7).

## Revendications

1. Vanne thermostatique (1) avec deux thermo-éléments (2; 3) disposés l'un au-dessus de l'autre, qui se trouvent dans un boîtier divisé (4), qui présente des ouvertures d'entrée et de sortie (5; 6; 7) et qui contient par ailleurs des ressorts de pression (8; 9) associés respectivement aux thermo-éléments (2; 3), caractérisée en ce que les parties (4/1, 4/2, 4/3) de la cage du boîtier (4) sont des pièces en matière plastique moulées par injection, qui sont assemblées de façon démontable contre la force des ressorts de pression (8; 9) et en ce que les ouvertures d'écoulement (5; 6; 10) prévues dans la cage du boîtier (4) et la configuration des thermo-éléments (2; 3) disposés dans la cage du boîtier (4) aux ouvertures d'écoulement (5; 6; 10) sont adaptées les unes aux autres en vue de la régulation directe du débit.

2. Vanne thermostatique suivant la revendication 1, caractérisée en ce que le premier thermo-élément (3) est un clapet d'étranglement travaillant en fonction de la température et l'autre thermo-élément (2) travaille en régulateur de mélange.

3. Vanne thermostatique suivant les revendications 1 ou 2, caractérisée en ce que les thermo-éléments (2; 3) présentent de préférence une forme cylindrique, avec un premier tronçon (2/3; 3/3) de plus petit diamètre et un tronçon de plus grand diamètre (2/4; 3/4) qui s'y raccorde.

4. Vanne thermostatique suivant les revendications 1 à 3, caractérisée en ce que l'ouverture d'entrée inférieure (5) peut être fermée par la face de base inférieure (2/2) du thermo-élément inférieur (2) (régulateur de mélange), l'ouverture d'entrée supérieure (6) peut voir sa section transversale d'écoulement modifiée par la face de base supérieure (3/1) du thermo-élément supérieur (3) (clapet d'étranglement), l'ouverture de passage centrale (10) peut également voir sa section transversale d'écoulement modifiée par la face de base inférieure (3/2) du thermo-élément supérieur (3), mais peut être fermée par la face de base supérieure (2/1) du thermo-élément inférieur (2).

5. Vanne thermostatique suivant l'une quelconque des revendications 1 à 4, caractérisée en ce que la cage du boîtier se compose de préférence de trois parties (4/1; 4/2; 4/3), qui présentent des ergots en saillie (11) à leur périphérie et des fentes (12) usinées dans la partie voisine, en vue de leur assemblage démontable.

6. Vanne thermostatique suivant l'une quelconque des revendications 1 à 5, caractérisée en ce qu'au moins les parties (4/2; 4/3) de la cage du boîtier (4) présentent chacune, à la périphérie extérieure, une rainure (13; 14), qui reçoivent des joints toriques (15; 16) pour assurer l'étanchéité par rapport au boîtier de montage (17), et en ce qu'il est prévu des moyens pour le positionnement correct de la cage du boîtier (4) dans le boîtier de montage (17), se composant d'une butée en forme d'ergot (18) qui peut être introduite dans une fente (19) du boîtier de montage (17).

7. Vanne thermostatique suivant les revendications précédentes, caractérisée en ce que les ergots (11), prévus sur la partie centrale (4/2) de la cage du boîtier (4), se trouvent sur les embouts d'engagement supérieurs et inférieurs (20; 21) disposés à cet endroit, et en ce que les axes de symétrie des embouts d'engagement (20; 21) ainsi que des ouvertures de passage (10) sont disposés avec un décalage l'un par rapport à l'autre.

8. Vanne thermostatique suivant les revendications précédentes, caractérisée en ce que les thermo-éléments (2; 3) sont pourvus d'une pointe de centrage (22) sur le piston (23) mobile sous des variations de température, qui peuvent être engagées dans des bagues de centrage (24; 25) prévues dans les ouvertures (5; 10) de la partie inférieure (4/3), respectivement centrale (4/2), de la cage du boîtier (4).

9. Vanne thermostatique suivant la revendication 8, caractérisée en ce que les bagues de centrage (24; 25) sont portées par des bras (26) s'étendant du bord des ouvertures (5; 10) jusqu'au point central des ouvertures (5; 10).

10. Vanne thermostatique suivant l'une quelconque des revendications précédentes, caractérisée en ce que l'ouverture de passage (10) pouvant être couverte par la face de base inférieure (3/2) du thermo-élément supérieur (3) présente un bourrelet annulaire périphérique (27), qui possède des découpes libres partielles non obturables (28).

11. Vanne thermostatique suivant les revendications précédentes, caractérisée en ce que des parois de guidage axiales (29) pour les thermo-éléments (2, respectivement 3), sont disposées autour de l'ouverture d'entrée supérieure (6) et autour de l'ouverture de passage (10).

12. Vanne thermostatique suivant les revendications précédentes, caractérisée en ce que les parois de guidage (29) dans l'ouverture d'entrée supérieure (6), entre lesquelles le thermo-élément supérieur (3) est mobile axialement lors de variations de température, s'étendent sur une courte distance dans l'ouverture d'entrée (6), d'une façon telle qu'il existe un écartement annulaire non obturable (30) entre l'ouverture d'entrée (6) et le thermo-élément (3).

13. Vanne thermostatique suivant les revendications précédentes, caractérisée en ce que les deux thermo-éléments (2; 3) présentent approximativement la même température de réaction, par exemple 80°C.

14. Vanne thermostatique suivant les revendications précédentes, caractérisée en ce que, dans la partie inférieure du boîtier (4/3), est formée une chambre de mélange (38) qui présente d'un côté un creux (40) et du côté opposé, tourné vers l'ouverture de sortie (7), un seuil (39), pour guider un liquide pénétrant par le bas d'abord dans la chambre de mélange (38), avant qu'il n'atteigne l'ouverture de sortie (7).
